# FASCICULE DE BREVET EUROPEEN

(11) **EP 4 399 400 B1**
(45) Date de publication et mention de la délivrance du brevet: **18.11.2026**
(21) Numéro de dépôt: 22789259.3
(22) Date de dépôt: 07.09.2022
(51) Int. Cl.: F02C 3/107, F02C 7/36, F02K 3/06

(54) **SOUPLESSES DANS UNE TURBOMACHINE À RÉDUCTEUR**
NACHGIEBIGKEITEN BEI EINER TURBOMASCHINE MIT UNTERSETZUNGSGETRIEBE
FLEXIBILITIES IN A TURBOMACHINE WITH SPEED REDUCER

(30) Priorité: 10.09.2021 FR 2109526
(43) Date de publication de la demande: 17.07.2024
(73) Titulaire: SAFRAN AIRCRAFT ENGINES, 75015 Paris (FR)
(72) Inventeur: BECOULET, Julien Fabien Patrick, 77550 MOISSY-CRAMAYEL (FR); GIVERT, Maxime Paul Numa, 77550 MOISSY-CRAMAYEL (FR); TAN-KIM, Alexandre Jean-Marie, 77550 MOISSY-CRAMAYEL (FR)
(74) Mandataire: Regimbeau
(86) Numéro de dépôt international: PCT/FR2022/051689
(87) Numéro de publication internationale: WO 2023/037074

(56) Documents cités:
- EP-A1- 3 002 433
- EP-A1- 3 832 101
- EP-A1- 3 832 112
- WO-A2-2015/156885
- US-B1- 10 837 370

## Description

### DOMAINE DE L'INVENTION

La présente invention concerne une turbomachine comprenant un dispositif de transmission mécanique.

Plus précisément, la présente invention porte sur la souplesse radiale du dispositif de transmission mécanique.

### ETAT DE LA TECHNIQUE

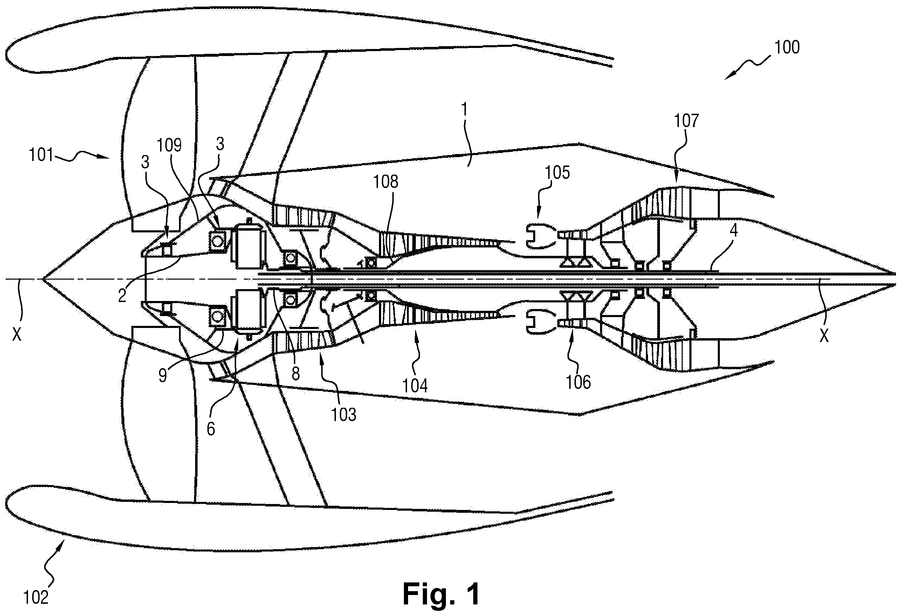

En référence à la figure 1, on connaît de l'état de la technique une turbomachine 100 présentant une architecture à réducteur, la turbomachine 100 étant centrée sur un axe longitudinal X-X. Une telle turbomachine 100 est notamment utilisée pour la propulsion d'un aéronef (non représenté) sur lequel elle est rapportée fixe.

Une architecture de turbomachine selon l'art antérieur est également présentée dans le document WO2015/156885A2.

Comme l'illustre la figure 1, la turbomachine 100 comprend une soufflante 101 entourée par un carénage 102. En outre, la turbomachine 100 comprend un carter 1 entourant une section de compresseur basse pression 103, une section de compresseur haute pression 104, une chambre de combustion 105, une section de turbine haute pression 106 et une section de turbine basse pression 107.

La turbomachine 100 comprend également un arbre de soufflante 2, un arbre de turbine basse pression 4 et un arbre de turbine haute pression 108, chaque arbre étant mobile en rotation par rapport au carter 1 autour de l'axe longitudinal X-X. L'arbre de soufflante 2 est supporté en rotation par un couple de paliers 3 montés fixes sur le carter 1.

L'arbre de soufflante 2 entraîne la soufflante 101, l'arbre de turbine basse pression 4 est entraîné par la section de turbine basse pression 107 et entraîne la section de compresseur basse pression 103, et l'arbre de turbine haute pression 108 est entraîné par la section de turbine haute pression 106 et entraîne la section de compresseur haute pression 104.

Comme visible sur la figure 1, la turbomachine 100 comprend également un dispositif de transmission mécanique 6, autrement appelé boîtier réducteur.

En fonctionnement, un flux d'air est aspiré par la soufflante 101 au sein de la turbomachine 100. Une partie de ce flux circule au sein du carter 1 pour être, successivement, compressée par la section de compresseur basse pression 103 puis la section de compresseur haute pression 104, enflammée au sein de la chambre de combustion 105, et enfin détendue par la section de turbine haute pression 106 puis la section de turbine basse pression 107.

Cette circulation permet d'entraîner au rotation l'arbre de turbine basse pression 4 et l'arbre de turbine haute pression 108 autour de l'axe longitudinal X-X. En outre, l'arbre de turbine basse pression 4 entraîne l'arbre de soufflante 2 par l'intermédiaire du dispositif de transmission mécanique 6, lequel transmet un couple et une vitesse de rotation de l'arbre de turbine basse pression 4 à l'arbre de soufflante 2. Le découplage dynamique de l'arbre de soufflante 2 et de l'arbre de turbine basse pression 4, permis par le dispositif de transmission mécanique 6, autorise l'arbre de turbine basse pression 4 à atteindre des vitesses de rotation bien plus élevées, sans risquer une survitesse à l'extrémité des pales de soufflante 101. De là, l'efficacité de la turbomachine 100 est améliorée, et sa taille peut être réduite.

L'utilisation d'un dispositif de transmission mécanique 6 pose néanmoins un certain nombre de difficultés, parmi lesquelles la stabilité mécanique du dispositif de transmission mécanique 6 en fonctionnement, laquelle influe directement sur son efficacité et sa durée de vie.

En effet, en fonctionnement, les différents composant de la turbomachine 100 sont susceptibles de suivre une évolution dynamique différente les uns des autres. Par exemple, l'arbre de soufflante 2 est susceptible d'être sujet à des mouvements dont l'intensité et la direction sont différents de mouvements dont l'arbre de turbine basse pression 4 est susceptible d'être sujet. Comme l'arbre de soufflante 2 et l'arbre de turbine basse pression 4 sont mécaniquement liés au dispositif de transmission mécanique 6, ce-dernier est alors susceptible d'accumuler des contraintes pour compenser ces évolutions dynamiques différentes. Typiquement, l'arbre de turbine basse pression 4 peut être sujet d'un déplacement radial, tandis que l'arbre de soufflante 2 demeure fixe radialement. Dans ce cas, c'est le dispositif de transmission mécanique 6 qui amortit cette différence de mouvement radial, en accumulant des contraintes mécaniques radiales.

Une solution pour tenir compte de cette difficulté serait de renforcer les composants du dispositif de transmission mécanique 6 afin de pouvoir supporter ces contraintes tout au long de la durée de vie de la turbomachine 100. Cette solution n'est toutefois pas satisfaisante car elle est coûteuse et conduit à une augmentation de la masse de la turbomachine 100 qui est telle que l'amélioration d'efficacité autorisé par l'architecture à réducteur est annihilée.

Une autre solution pour tenir compte de cette difficulté consiste à tenter de limiter la raideur de certaines parties du dispositif de transmission mécanique 6, et notamment de limiter la raideur des éléments 8, 9 supportant le dispositif de transmission mécanique 6. Il a ainsi été proposé des valeurs de rapports entre des raideurs de ces éléments 8, 9 et des raideurs du support 109, permettant de limiter l'accumulation des contraintes au sein du dispositif de transmission mécanique 6. Cette solution n'est pas non plus satisfaisante. En effet, il n'est généralement pas clair de cette solution quelle portion de ces éléments 8, 9 doivent être rendus moins raides, ni la manière dont cette diminution de raideur peut être mesurée. Dès lors, les valeurs de rapports qui ont été proposées ne sont en réalité d'aucune aide pour améliorer la durée de vie du dispositif de transmission mécanique 6, tout en limitant son poids.

Il existe donc un besoin de surmonter les inconvénients de l'état de la technique.

### EXPOSE DE L'INVENTION

Un but de l'invention est de réduire les contraintes mécaniques au sein d'un dispositif de transmission mécanique d'une turbomachine à réducteur.

Il est à cet effet proposé, selon un premier aspect de l'invention, un ensemble pour turbomachine comprenant :
- un carter,
- un arbre de soufflante mobile en rotation par rapport au carter autour d'un axe longitudinal de la turbomachine,
- un premier palier configuré pour supporter en rotation l'arbre de soufflante, le premier palier étant monté fixe sur le carter,
- un arbre de turbine mobile en rotation par rapport au carter autour de l'axe longitudinal,
- un deuxième palier configuré pour supporter en rotation l'arbre de turbine, le deuxième palier étant monté fixe sur le carter,
- un dispositif de transmission mécanique, l'arbre de turbine entrainant l'arbre de soufflante par l'intermédiaire du dispositif de transmission mécanique,
- un premier élément de connexion présentant une première extrémité reliée à l'arbre de soufflante et montée sur le premier palier, et une deuxième extrémité reliée au dispositif de transmission mécanique, le premier élément de connexion présentant une première souplesse radiale,
- un deuxième élément de connexion présentant une troisième extrémité reliée à l'arbre de turbine et montée sur le deuxième palier, et une quatrième extrémité reliée au dispositif de transmission mécanique, le deuxième élément de connexion présentant une deuxième souplesse radiale, et
- un troisième élément de connexion présentant une cinquième extrémité montée fixe sur le carter et une sixième extrémité reliée au dispositif de transmission mécanique, le troisième élément de connexion présentant une troisième souplesse radiale,
dans lequel un rapport entre la première souplesse radiale et la troisième souplesse radiale est strictement inférieur à 10% et/ou un rapport entre la première souplesse radiale et la deuxième souplesse radiale est strictement inférieur à 4%.

Conserver le rapport entre la première souplesse radiale et la troisième souplesse radiale strictement inférieur à 10% et/ou le rapport entre la première souplesse radiale et la deuxième souplesse radiale strictement inférieur à 4% assure une répartition des contraintes radiales entre les éléments de connexion qui est optimales, ce qui réduit efficacement les contraintes mécaniques, notamment radiales, au sein du dispositif de transmission mécanique. L'usure du dispositif de transmission mécanique est donc réduite, et sa durée de vie s'allonge. En outre, l'efficacité de la turbomachine en est améliorée.

Avantageusement, mais facultativement, l'ensemble selon l'invention peut comprendre l'une au moins des caractéristiques suivantes, prise seule ou en combinaison :
- le dispositif de transmission mécanique est un train épicycloïdal comprenant une couronne, une pluralité d'engrenages satellites rapportés sur un porte-satellites et un engrenage solaire,
- la deuxième extrémité est montée sur la couronne qui est mobile en rotation autour de l'axe longitudinal, la quatrième extrémité est montée sur l'engrenage solaire qui est mobile en rotation autour de l'axe longitudinal, et la sixième extrémité est montée sur le porte-satellites,
- la deuxième extrémité est montée sur le porte-satellites qui est mobile en rotation autour de l'axe longitudinal, la quatrième extrémité est montée sur l'engrenage solaire qui est mobile en rotation autour de l'axe longitudinal, et la sixième extrémité est montée sur la couronne,
- le deuxième palier est un roulement comprenant une rangée de billes ou une rangée de rouleaux,
- la deuxième souplesse radiale est supérieure ou égale à 20.10⁻⁹ m. N⁻¹, par exemple entre 50.10⁻⁹ m.N⁻¹ et 200.10⁻⁹ m. N⁻¹, et vaut de préférence 100.10⁻⁹ m. N⁻¹, et
- la troisième souplesse radiale est comprise entre 350*10⁻⁹ m.N⁻¹ et 1500.10⁻⁹ m.N⁻¹, par exemple entre 500.10⁻⁹ m.N⁻¹ et 1000.10⁻⁹ m.N⁻¹, et vaut de préférence 800.10⁻⁹ m.N⁻¹.

Selon un deuxième aspect de l'invention, il est proposé une turbomachine comprenant un ensemble tel que précédemment décrit.

Selon un troisième aspect de l'invention, il est proposé un aéronef comprenant une turbomachine telle que précédemment décrite.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1, déjà décrite, est une vue en coupe d'une turbomachine à réducteur connue de l'état de la technique.
La figure 2 est une vue en coupe d'un mode de réalisation d'un ensemble pour turbomachine selon l'invention.
La figure 3 est une vue en coupe d'un mode de réalisation d'un ensemble pour turbomachine selon l'invention.

Sur l'ensemble des figures, les éléments similaires portent des références identiques.

### DESCRIPTION DETAILLEE DE L'INVENTION

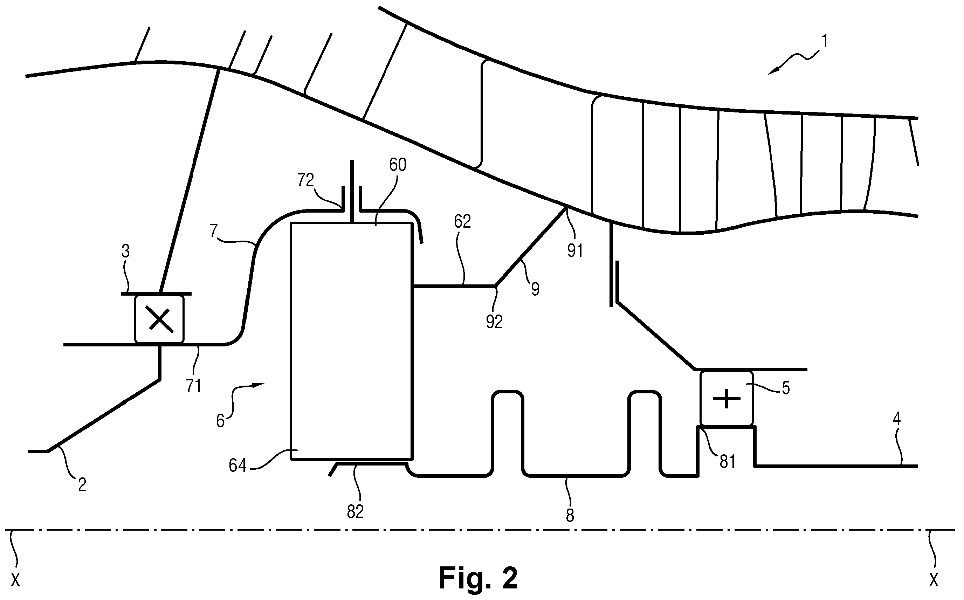

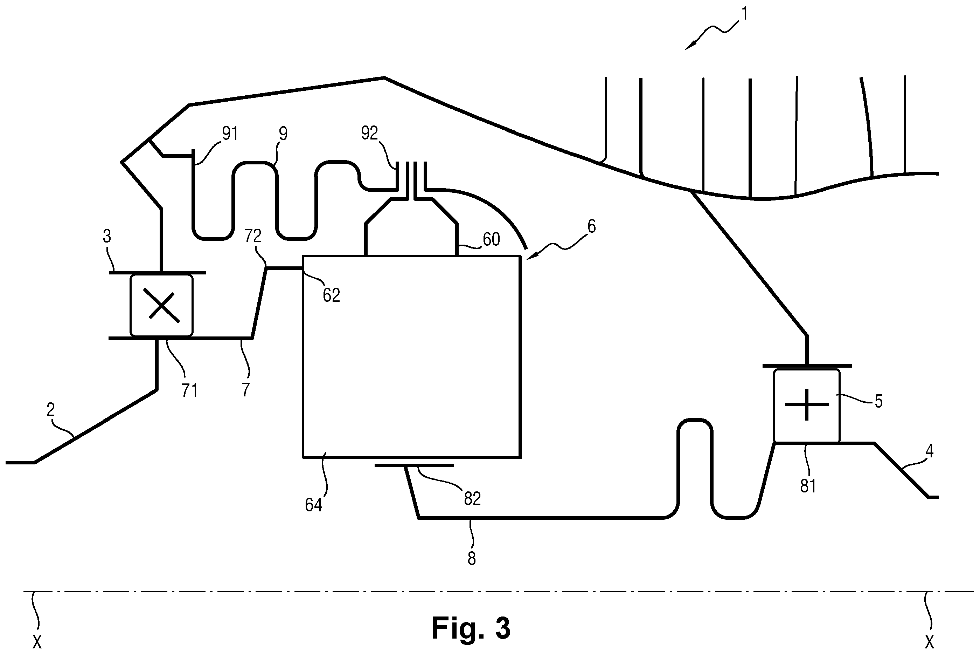

Les figures 2 et 3 illustrent, chacune, un mode de réalisation d'une partie d'une turbomachine à réducteur 100. Les éléments de cette turbomachine 100 qui ne figurent pas sur les figures 2 et 3 sont similaires aux éléments correspondants de la turbomachine illustrée sur la figure 1, déjà décrite. Bien entendu, le présent exposé n'est pas limité aux turbomachines à réducteur 100 telles que celle illustrée sur la figure 1. De fait, le présent exposé est, par exemple, applicable aux turbomachines à réducteur 100 comprenant plus que deux corps, typiquement trois corps, mais aussi aux turbomachines à réducteur 100 dont la soufflante 101 n'est pas carénée.

Dans le présent texte, l'amont et l'aval sont définis par rapport au sens d'écoulement normal de l'air à travers la turbomachine 100 en fonctionnement. De même, une direction axiale correspond à la direction de l'axe longitudinal X-X, une direction radiale fait référence à une direction qui est perpendiculaire à cet axe longitudinal X-X et passe par ce-dernier, et une direction circonférentielle, ou tangentielle, correspond à la direction d'une ligne courbe plane et fermée, dont tous les points se trouvent à égale distance de l'axe longitudinal X-X. Par ailleurs, et sauf précision contraire, les termes « interne (ou intérieur) » et « externe (ou extérieur) », respectivement, sont utilisés en référence à une direction radiale de sorte que la partie ou la surface interne (i.e. radialement interne) d'un élément est plus proche de l'axe longitudinal X-X que la partie ou la surface externe (i.e. radialement externe) du même élément.

En référence aux figures 2 et 3, le dispositif de transmission mécanique 6 est, de préférence, un train épicycloïdal comprenant une couronne 60, une pluralité d'engrenages satellites rapportés sur un porte-satellites 62 et un engrenage solaire 64.

En outre, un premier palier 3 est agencé en aval de l'arbre de soufflante 2 et monté fixe sur le carter 1. Avantageusement, le premier palier 3 est un roulement comprenant une rangée de billes, afin de reprendre efficacement les efforts exercés sur l'arbre de soufflante 2. Ainsi, le premier palier 3 comprend une première bague et une deuxième bague, coaxiales et centrées sur l'axe longitudinal X-X, entre lesquelles est placée au moins une rangée de billes. La première bague est montée fixe sur le carter 1 et la deuxième bague est montée fixe sur l'arbre de soufflante 2.

Par ailleurs, un deuxième palier 5 est monté fixe sur le carter 1 et configuré pour supporter en rotation l'arbre de turbine 4, en amont de ce-dernier. Avantageusement, le deuxième palier 5 est un roulement comprenant une rangée de billes ou une rangée de rouleaux, afin de reprendre efficacement les efforts exercés en amont de l'arbre de turbine 4. Ainsi, le deuxième palier 5 comprend une troisième bague et une quatrième bague, coaxiales et centrées sur l'axe longitudinal X-X, entre lesquelles est placée une rangée de billes ou de rouleaux. La troisième bague est montée fixe sur le carter 1 et la quatrième bague est montée fixe sur l'arbre de turbine 4.

Comme visible sur chacune des figures 2 et 3, un premier élément de connexion 7 relie l'arbre de soufflante 2 au dispositif de transmission mécanique 6. Le premier élément de connexion 7 est centré sur l'axe longitudinal X-X. Plus précisément, le premier élément de connexion 7 présente une première extrémité 71 reliée à l'arbre de soufflante 2 et une deuxième extrémité 72 reliée au dispositif de transmission mécanique 6. En fait, la première extrémité 71 est montée sur le premier palier 3.

En outre, un deuxième élément de connexion 8 relie l'arbre de turbine 4 au dispositif de transmission mécanique 6. Le deuxième élément de connexion 8 est également centré sur l'axe longitudinal X-X. De plus, le deuxième élément de connexion 8 présente une troisième extrémité 81 reliée à l'arbre de turbine 4 et une quatrième extrémité 82 reliée au dispositif de transmission mécanique 6. En fait, la troisième extrémité 81 est montée sur le deuxième palier 5.

Par ailleurs, un troisième élément de connexion 9, centré sur l'axe longitudinal X-X, relie le dispositif de transmission mécanique 6 au carter 1. Plus précisément, le troisième élément de connexion 9 présente une cinquième extrémité 91 montée fixe sur le carter 1 et une sixième extrémité 92 reliée au dispositif de transmission mécanique 6.

Dans le mode de réalisation illustré sur la figure 2, la deuxième extrémité 72 est montée, de préférence fixe, sur la couronne 60 qui est mobile en rotation autour de l'axe longitudinal X-X, la quatrième extrémité 82 est montée, de préférence fixe, sur l'engrenage solaire 64 qui est mobile en rotation autour de l'axe longitudinal X-X, et la sixième extrémité 92 est montée, de préférence fixe, sur le porte-satellites 62.

Dans le mode de réalisation illustré sur la figure 3, la deuxième extrémité 72 est montée, de préférence fixe, sur le porte-satellites 62 qui est mobile en rotation autour de l'axe longitudinal X-X, la quatrième extrémité 82 est montée, de préférence fixe, sur l'engrenage solaire 64 qui est mobile en rotation autour de l'axe longitudinal X-X, et la sixième extrémité 92 est montée, de préférence fixe, sur la couronne 60.

Le premier élément de connexion 7 présente une première souplesse radiale SR1, le deuxième élément de connexion 8 présente une deuxième souplesse radiale SR2 et le troisième élément de connexion 9 présente une troisième souplesse radiale SR3.

La souplesse radiale SR1, SR2, SR3 d'un élément de connexion 7, 8, 9 est définie de manière intrinsèque, c'est-à-dire en considérant l'élément de connexion en tant que tel 7, 8, 9, en dehors de la turbomachine 100, c'est-à-dire avant ou après être monté dans cette-dernière. De cette manière, il est possible de dimensionner chaque élément de connexion 7, 8, 9 de manière absolue, ce qui permet de l'intégrer dans n'importe quelle turbomachine 100.

Ainsi, la souplesse radiale SR1, SR2, SR3 d'un élément de connexion 7, 8, 9 est définie en assimilant l'élément de connexion 7, 8, 9 à une poutre encastrée au niveau d'une extrémité 71, 81, 91, et libre d'être sujette à des mouvements radiaux au niveau de l'autre extrémité 72, 82, 92. De fait, ceci correspond aux conditions dans lesquelles l'élément de connexion 7, 8, 9 est sollicité au sein de la turbomachine 100. Par exemple, le premier élément de connexion 7 est moins libre d'être sujet à des mouvements radiaux par rapport au carter 1 au niveau de la première extrémité 71 qu'au niveau de la deuxième extrémité 72. De là, la souplesse radiale SR1, SR2, SR3 d'un élément de connexion 7, 8, 9 est définie comme un rapport entre, d'une part, un déplacement radial de l'extrémité libre 72, 82, 92 par rapport à l'extrémité encastrée 71, 81, 91, laquelle extrémité libre 72, 82, 92 étant soumise à un chargement dans une direction radiale, typiquement un chargement en traction et/ou compression, et, d'autre part, l'effort, typiquement de traction et/ou compression, appliqué au niveau de l'extrémité libre 72, 82, 92 pour générer ce déplacement radial.

Une telle souplesse radiale SR1, SR2, SR3 peut, par exemple, être mesurée sur un banc d'essai, en encastrant l'une des extrémités 71, 72, 81, 82, 91, 92 de l'élément de connexion 7, 8, 9, puis en sollicitant radialement l'autre extrémité 71, 72, 81, 82, 91, 92. Le choix de l'extrémité 71, 72, 81, 82, 91, 92 à encastrer n'a pas d'importance dans la mesure où la souplesse radiale SR1, SR2, SR3 d'un élément de connexion 7, 8, 9 est associée un déplacement relatif entre les deux extrémités 71, 72, 81, 82, 91, 92 de l'élément de connexion 7, 8, 9. Peu importe donc que l'extrémité 71, 72, 81, 82, 91, 92 encastrée lors de la mesure soit effectivement l'extrémité 71, 81, 91 qui, lors du fonctionnement de la turbomachine 100, est soumise à des mouvements radiaux par rapport au carter 1 qui sont de moins grande ampleur par rapport à l'autre extrémité 72, 82, 92 de l'élément de connexion 7, 8, 9. En tout état de cause, il est possible de prendre en compte, pour le calcul de la souplesse radiale SR1, SR2, SR3 d'un élément de connexion 7, 8, 9, les déplacements radiaux relatifs entre l'extrémité libre 72, 82, 92 et l'extrémité encastrée 71, 81, 91. De fait, au sein de la turbomachine 100, aucune de la première extrémité 71, de la troisième extrémité 81 ou de la cinquième extrémité 91, n'est rigoureusement immobile radialement par rapport au carter 1.

Par exemple, la première souplesse radiale SR1 est mesurée en sortant le premier élément de connexion 7 de la turbomachine 100, en la plaçant sur un banc d'essai, en encastrant la première extrémité 71, et en sollicitant radialement la deuxième extrémité 72, typiquement via un chargement en traction et/ou en compression dans une direction radiale. Le déplacement radial de l'extrémité libre 72, 82, 92 par rapport à l'extrémité encastrée 71, 81, 91, qui est associé à chacun des efforts radiaux appliqué au niveau de l'extrémité libre 72, 82, 92, est ensuite relevé. Puis une régression, par exemple de type linéaire, est réalisée sur l'ensemble des points relevés, et la souplesse radiale SR1, SR2, SR3 de l'élément de connexion 7, 8, 9 est déterminée, typiquement comme le coefficient directeur de la droite obtenue par régression linéaire. Bien entendu, il n'est pas forcément nécessaire d'utiliser un banc d'essai, puisque de telles mesure peuvent également être réalisées par simulation numérique assistée par ordinateur, typiquement en isolant le premier élément de connexion 7 du reste de la turbomachine 100, et en simulant l'encastrement et la sollicitation déjà décrits.

En tenant compte de relations entre les souplesses radiales SR1, SR2, SR3 au moment du dimensionnement des éléments de connexion 7, 8, 9, il est possible de soulager le dispositif de transmission mécanique 6 de son rôle d'amortissement des mouvements radiaux relatifs de l'arbre de soufflante 2 et/ou du dispositif de transmission mécanique 6 et/ou de l'arbre de turbine 4. En effet, grâce à une certaine souplesse radiale SR1, SR2, SR3 des éléments de connexion 7, 8, 9, les déplacements radiaux des différents composants au sein du dispositif de transmission mécanique 6 sont limités, ce qui réduit d'autant les contraintes mécaniques au sein du dispositif de transmission mécanique 6. De là, l'usure du dispositif de transmission mécanique 6 est réduite et sa durée de vie allongée, et ce sans qu'il ne soit nécessaire de renforcer le dispositif de transmission mécanique 6, c'est-à-dire de l'alourdir.

Bien entendu, les sollicitations mécaniques exercées sur le dispositif de transmission mécanique 6 par l'arbre de soufflante 2 et l'arbre de turbine 4 ne sont pas limitées à une direction radiale. De fait, l'arbre de soufflante 2 et l'arbre de turbine 4 sont également sujets à des mouvements axiaux et des mouvements circonférentiels (i.e. en torsion), qui sont tout autant susceptibles d'induire des contraintes dans le dispositif de transmission mécanique 6.

En tout état de cause, la première souplesse radiale SR1 est la plus faible des souplesses radiales. Ceci s'explique par le fait que le premier élément de connexion 7 est celui présentant un diamètre (voir figure 2) et/ou une épaisseur radiale (voir figure 3) qui est le plus important de tous les éléments de connexion 7, 8, 9. En outre, ceci s'explique par l'intensité des efforts auxquels le premier élément de connexion 7 est soumis, notamment en provenance de la soufflante 101. Par conséquent, lors du dimensionnement de cette partie de la turbomachine 100, le premier élément de connexion 7 est choisi comme référence pour déterminer la deuxième souplesse radiale SR2 et la troisième souplesse radiale SR3. Ainsi, en fonctionnement, ce sont les mouvements radiaux de la deuxième extrémité 72 qui pilotent les mouvements radiaux de la quatrième extrémité 82 et de la sixième extrémité 92.

En outre, prendre le premier élément de connexion 7 comme référence pour déterminer la deuxième souplesse radiale SR2 et la troisième souplesse radiale SR3 s'est avéré plus pertinent que prendre le support 109 du premier palier 3, comme recommandé dans l'état de la technique. De fait, le premier élément de connexion 7 est plus proche du dispositif de transmission mécanique 6 que ne l'est le support 109. Par conséquent, il est possible d'accéder à un dimensionnement plus fin des souplesses radiales SR1, SR2, SR3. Ceci offre une plus grande liberté de dimensionnement du reste de la turbomachine 100, ce qui facilite la conception et en réduit le temps et le coût.

Toutefois, dans des exemples ne formant pas partie de l'invention, il est possible de considérer la souplesse radiale de l'ensemble formé du premier élément de connexion 7, du premier palier 3 et du support 109, ou de l'ensemble formé du premier élément de connexion 7 et de l'arbre de soufflante 2, comme référence pour déterminer la deuxième souplesse radiale SR2 et la troisième souplesse radiale SR3. La définition de la souplesse radiale de tels ensembles est la même que celle déjà décrite pour la première souplesse radiale SR1. En outre, la méthode de mesure de la souplesse radiale de tels ensembles suit le même protocole que celui déjà décrit pour la première souplesse radiale. Typiquement, une des extrémités d'un tel ensemble, typiquement une des extrémités axiales, est encastrée, tandis que l'autre extrémité, typiquement l'autre extrémité axiale, est soumise à une sollicitation radiale. Déplacements et efforts radiaux correspondants sont relevés puis corrélés pour déterminer la souplesse radiale de l'ensemble qui servira ensuite de référence pour déterminer la deuxième souplesse radiale SR2 et la troisième souplesse radiale SR3.

En tout état de cause, la première souplesse radiale SR1 ou, plus généralement, la souplesse radiale d'un des ensembles déjà décrits, est strictement inférieure à la troisième souplesse radiale SR3, et la troisième souplesse radiale SR3 est strictement inférieure à la deuxième souplesse radiale SR2. Ceci est notamment réalisé en faisant en sorte que le deuxième élément de connexion 8 présente un diamètre plus faible que le premier élément de connexion 7 et le troisième élément de connexion 9. En outre, l'arbre de soufflante 2 et le support 109 sont dimensionnés de manière très rigide pour pouvoir supporter les balourds de la soufflante 101 lors du fonctionnement de la turbomachine 100. Par conséquent, il est plus facile de dimensionner les éléments de connexion 7, 8, 9 les unes par rapport aux autres en se fixant cet ordre des souplesses radiales SR1, SR2, SR3 comme contrainte de conception.

Plus précisément, un rapport entre la première souplesse radiale SR1 (ou la souplesse radiale d'un des ensembles déjà décrits) et la troisième souplesse radiale SR3 est strictement inférieur à 10%. En d'autres termes, la troisième souplesse radiale SR3 est strictement supérieure à dix (10) fois la première souplesse radiale SR1 (ou la souplesse radiale d'un des ensembles déjà décrits). Alternativement, ou en complément, un rapport entre la première souplesse radiale SR1 (ou la souplesse radiale d'un des ensembles déjà décrits) et la deuxième souplesse radiale SR2 est strictement inférieur à 4%. En d'autres termes, la deuxième souplesse radiale SR2 est strictement supérieure à vingt-cinq (25) fois la première souplesse radiale SR1 (ou la souplesse radiale d'un des ensembles déjà décrits).

Ces différentes valeurs de rapport permettent d'assurer une bonne répartition des contraintes radiales entre le deuxième élément de connexion 8 et le troisième élément de connexion 9 lorsque la deuxième extrémité 72 sollicite le dispositif de transmission mécanique 6 selon un mouvement radial.

Ces relations entre les souplesses radiales peuvent ainsi servir de guide lors du dimensionnement de cette partie de la turbomachine 100. En effet, en s'assurant que ces relations sont respectées lors de la conception de la turbomachine 100, il est possible de garantir une réduction des contraintes mécaniques au sein du dispositif de transmission mécanique 6 et, de là, une augmentation de sa durée de vie et une amélioration de l'efficacité de la turbomachine 100.

Dans un mode de réalisation avantageux, la deuxième souplesse radiale SR2 est supérieure ou égale à 20.10⁻⁹ m.N⁻¹, typiquement entre 50.10⁻⁹ m.N⁻¹ et 200.10⁻⁹ m.N⁻¹, et vaut de préférence 100.10⁻⁹ m.N⁻¹. En outre, la troisième souplesse radiale SR3 est comprise entre 350*10⁻⁹ m.N⁻¹ et 1500.10⁻⁹ m.N⁻¹, typiquement entre 500.10⁻⁹ m.N⁻¹ et 1000.10⁻⁹ m.N⁻¹, et vaut de préférence 800.10⁻⁹ m.N⁻¹.

## Revendications

1. Ensemble pour turbomachine (100) comprenant :
- un carter (1),
- un arbre de soufflante (2) mobile en rotation par rapport au carter (1) autour d'un axe longitudinal (X-X) de la turbomachine,
- un premier palier (3) configuré pour supporter en rotation l'arbre de soufflante (2), le premier palier (3) étant monté fixe sur le carter (1),
- un arbre de turbine (4) mobile en rotation par rapport au carter (1) autour de l'axe longitudinal (X-X),
- un deuxième palier (5) configuré pour supporter en rotation l'arbre de turbine (4), le deuxième palier étant monté fixe sur le carter (1),
- un dispositif de transmission mécanique (6), l'arbre de turbine (4) entrainant l'arbre de soufflante (2) par l'intermédiaire du dispositif de transmission mécanique (6),
l'ensemble étant **caractérisé en ce qu'**il comprend
- un premier élément de connexion (7) présentant une première extrémité (71) reliée à l'arbre de soufflante (2) et montée sur le premier palier (3), et une deuxième extrémité (72) reliée au dispositif de transmission mécanique (6), le premier élément de connexion (7) présentant une première souplesse radiale (SR1),
- un deuxième élément de connexion (8) présentant une troisième extrémité (81) reliée à l'arbre de turbine (4) et montée sur le deuxième palier (5), et une quatrième extrémité (82) reliée au dispositif de transmission mécanique (6), le deuxième élément de connexion (8) présentant une deuxième souplesse radiale (SR2), et
- un troisième élément de connexion (9) présentant une cinquième extrémité (91) montée fixe sur le carter (1) et une sixième extrémité (92) reliée au dispositif de transmission mécanique (6), le troisième élément de connexion (9) présentant une troisième souplesse radiale (SR3),
dans lequel un rapport entre la première souplesse radiale (SR1) et la troisième souplesse radiale (SR3) est strictement inférieur à 10% et/ou un rapport entre la première souplesse radiale (SR1) et la deuxième souplesse radiale (SR2) est strictement inférieur à 4%.

2. Ensemble selon la revendication 1, dans lequel le dispositif de transmission mécanique (6) est un train épicycloïdal comprenant une couronne (60), une pluralité d'engrenages satellites rapportés sur un porte-satellites (62) et un engrenage solaire (64).

3. Ensemble selon la revendication 2, dans lequel la deuxième extrémité (72) est montée sur la couronne (60) qui est mobile en rotation autour de l'axe longitudinal (X-X), la quatrième extrémité (82) est montée sur l'engrenage solaire (64) qui est mobile en rotation autour de l'axe longitudinal (X-X), et la sixième extrémité (92) est montée sur le porte-satellites (62).

4. Ensemble selon la revendication 2, dans lequel la deuxième extrémité (72) est montée sur le porte-satellites (62) qui est mobile en rotation autour de l'axe longitudinal (X-X), la quatrième extrémité (82) est montée sur l'engrenage solaire (64) qui est mobile en rotation autour de l'axe longitudinal (X-X), et la sixième extrémité (92) est montée sur la couronne (60).

5. Ensemble selon l'une quelconque des revendications 1 à 4, dans lequel le deuxième palier (5) est un roulement comprenant une rangée de billes ou une rangée de rouleaux.

6. Ensemble selon l'une quelconque des revendications 1 à 5, dans lequel la deuxième souplesse radiale (SR2) est supérieure ou égale à 20.10⁻⁹ m.N⁻¹, par exemple entre 50.10⁻⁹ m.N⁻¹ et 200.10⁻⁹ m. N⁻¹, et vaut de préférence 100.10⁻⁹ m.N⁻¹.

7. Ensemble selon l'une quelconque des revendications 1 à 6, dans lequel la troisième souplesse radiale (SR3) est comprise entre 350*10⁻⁹ m.N⁻¹ et 1500.10⁻⁹ m.N⁻¹, par exemple entre 500.10⁻⁹ m.N⁻¹ et 1000.10⁻⁹ m. N⁻¹, et vaut de préférence 800.10⁻⁹ m.N⁻¹.

8. Turbomachine (100) comprenant un ensemble selon l'une quelconque des revendications 1 à 7.

9. Aéronef comprenant une turbomachine selon la revendication 8.

## Patentansprüche

1. Baugruppe für eine Turbomaschine (100), umfassend:
- ein Gehäuse (1),
- eine Bläserwelle (2), die relativ zu dem Gehäuse (1) um eine Längsachse (X-X) der Turbomaschine drehbar ist,
- ein erstes Lager (3), das dafür konfiguriert ist, die Bläserwelle (2) drehbar zu lagern, wobei das erste Lager (3) fest an dem Gehäuse (1) angebracht ist,
- eine Turbinenwelle (4), die relativ zu dem Gehäuse (1) um die Längsachse (X-X) drehbar ist,
- ein zweites Lager (5), das dafür konfiguriert ist, die Turbinenwelle (4) drehbar zu lagern, wobei das zweite Lager fest an dem Gehäuse (1) angebracht ist,
- eine mechanische Übertragungsvorrichtung (6), wobei die Turbinenwelle (4) die Bläserwelle (2) über die mechanische Übertragungsvorrichtung (6) antreibt,
wobei die Baugruppe **dadurch gekennzeichnet ist, dass** sie umfasst
- ein erstes Verbindungselement (7), das ein erstes Ende (71), welches mit der Bläserwelle (2) verbunden und an dem ersten Lager (3) angebracht ist, und ein zweites Ende (72) aufweist, welches mit der mechanischen Übertragungsvorrichtung (6) verbunden ist, wobei das erste Verbindungselement (7) eine erste radiale Nachgiebigkeit (SR1) aufweist,
- ein zweites Verbindungselement (8), das ein drittes Ende (81), welches mit der Turbinenwelle (4) verbunden und an dem zweiten Lager (5) angebracht ist, und ein viertes Ende (82) aufweist, welches mit der mechanischen Übertragungsvorrichtung (6) verbunden ist, wobei das zweite Verbindungselement (8) eine zweite radiale Nachgiebigkeit (SR2) aufweist, und
- ein drittes Verbindungselement (9), das ein fünftes Ende (91), welches fest an dem Gehäuse (1) angebracht ist, und ein sechstes Ende (92) aufweist, welches mit der mechanischen Übertragungsvorrichtung (6) verbunden ist, wobei das dritte Verbindungselement (9) eine dritte radiale Nachgiebigkeit (SR3) aufweist,
wobei ein Verhältnis zwischen der ersten radialen Nachgiebigkeit (SR1) und der dritten radialen Nachgiebigkeit (SR3) strikt kleiner als 10 % ist und/oder ein Verhältnis zwischen der ersten radialen Nachgiebigkeit (SR1) und der zweiten radialen Nachgiebigkeit (SR2) strikt kleiner als 4 % ist.

2. Baugruppe nach Anspruch 1, wobei die mechanische Übertragungsvorrichtung (6) ein Planetengetriebe ist, das ein Hohlrad (60), eine Vielzahl von Planetenrädern, die an einem Planetenträger (62) angebracht sind, und ein Sonnenrad (64) umfasst.

3. Baugruppe nach Anspruch 2, wobei das zweite Ende (72) an dem Hohlrad (60) angebracht ist, welches um die Längsachse (X-X) drehbar ist, das vierte Ende (82) an dem Sonnenrad (64) angebracht ist, welches um die Längsachse (X-X) drehbar ist, und das sechste Ende (92) an dem Planetenträger (62) angebracht ist.

4. Baugruppe nach Anspruch 2, wobei das zweite Ende (72) an dem Planetenträger (62) angebracht ist, welcher um die Längsachse (X-X) drehbar ist, das vierte Ende (82) an dem Sonnenrad (64) angebracht ist, welches um die Längsachse (X-X) drehbar ist, und das sechste Ende (92) an dem Hohlrad (60) angebracht ist.

5. Baugruppe nach einem der Ansprüche 1 bis 4, wobei das zweite Lager (5) ein Wälzlager ist, das eine Reihe von Kugeln oder eine Reihe von Rollen umfasst.

6. Baugruppe nach einem der Ansprüche 1 bis 5, wobei die zweite radiale Nachgiebigkeit (SR2) größer oder gleich 20.10⁻⁹ m.N⁻¹ ist, beispielsweise zwischen 50.10⁻⁹ m.N⁻¹ und 200.10⁻⁹ m.N⁻¹ liegt, und vorzugsweise 100.10⁻⁹ m.N⁻¹ beträgt.

7. Baugruppe nach einem der Ansprüche 1 bis 6, wobei die dritte radiale Nachgiebigkeit (SR3) zwischen 350*10⁻⁹ m.N⁻¹ und 1500.10⁻⁹ m.N⁻¹ liegt, beispielsweise zwischen 500.10⁻⁹ m.N⁻¹ und 1000.10⁻⁹ m.N⁻¹, und vorzugsweise 800.10⁻⁹ m.N⁻¹ beträgt.

8. Turbomaschine (100), umfassend eine Baugruppe nach einem der Ansprüche 1 bis 7.

9. Luftfahrzeug, umfassend eine Turbomaschine nach Anspruch 8.

## Claims

1. An assembly for a gas turbine engine (100) comprising:
- a casing (1),
- a fan shaft (2) movable in rotation relative to the casing (1) about a longitudinal axis (X-X) of the gas turbine engine,
- a first bearing (3) configured to support in rotation the fan shaft (2), the first bearing (3) being fixedly mounted on the casing (1),
- a turbine shaft (4) movable in rotation relative to the casing (1) about the longitudinal axis (X-X),
- a second bearing (5) configured to support in rotation the turbine shaft (4), the second bearing being fixedly mounted on the casing (1),
- a mechanical transmission device (6), the turbine shaft (4) driving the fan shaft (2) via the mechanical transmission device (6),
the assembly being **characterized in that** it comprises:
- a first connection element (7) having a first end (71) connected to the fan shaft (2) and mounted on the first bearing (3), and a second end (72) connected to the mechanical transmission device (6), the first connection element (7) having a first radial flexibility (SR1),
- a second connection element (8) having a third end (81) connected to the turbine shaft (4) and mounted on the second bearing (5), and a fourth end (82) connected to the mechanical transmission device (6), the second connection element (8) having a second radial flexibility (SR2), and
- a third connection element (9) having a fifth end (91) fixedly mounted on the casing (1) and a sixth end (92) connected to the mechanical transmission device (6), the third connection element (9) having a third radial flexibility (SR3),
wherein a ratio between the first radial flexibility (SR1) and the third radial flexibility (SR3) is strictly less than 10% and/or a ratio between the first radial flexibility (SR1) and the second radial flexibility (SR2) is strictly less has 4%.

2. The assembly according to claim 1, wherein the mechanical transmission device (6) is an epicyclic gear train comprising a ring gear (60), a plurality of planet gears supported by a planet gears carrier (62) and a sun gear (64).

3. The assembly according to claim 2, wherein the second end (72) is mounted on the ring gear (60) which is movable in rotation about the longitudinal axis (X-X), the fourth end (82) is mounted on the sun gear (64) which is movable in rotation about the longitudinal axis (X-X), and the sixth end (92) is mounted on the planet gears carrier (62).

4. The assembly according to claim 2, wherein the second end (72) is mounted on the planet gears carrier (62) which is movable in rotation about the longitudinal axis (X-X), the fourth end (82) is mounted on the sun gear (64) which is movable in rotation about the longitudinal axis (X-X), and the sixth end (92) is mounted on the ring gear (60).

5. The assembly according to any one of claims 1 to 4, wherein the second bearing (5) is a rolling comprising a row of balls or a row of rollers.

6. The assembly according to any one of claims 1 to 5, wherein the second radial flexibility (SR2) is greater than or equal to 20.10⁻⁹ m.N⁻¹, for example between 50.10⁻⁹ m.N⁻¹ and 200.10⁻⁹ m. N⁻¹, and is preferably 100.10⁻⁹ m.N⁻¹.

7. The assembly according to any one of claims 1 to 6, wherein the third radial flexibility (SR3) is comprised between 350*10⁻⁹ m.N⁻¹ and 1,500.10⁻⁹ m.N⁻¹, for example between 500.10⁻⁹ m.N⁻¹ and 1,000.10⁻⁹ m.N⁻¹, and is preferably 800.10⁻⁹ m.N⁻¹.

8. A gas turbine engine (100) comprising an assembly according to any one of claims 1 to 7.

9. An aircraft comprising a gas turbine engine according to claim 8.
